# EUROPÄISCHE PATENTANMELDUNG

(11) **EP 0 961 198 A2**
(43) Veröffentlichungstag der Anmeldung: **01.12.1999**
(21) Anmeldenummer: 99109569.6
(22) Anmeldetag: 14.05.1999
(51) Int. Cl.: G06F 3/033, G01C 21/20

(54) **Elekronisches Gerät mit einem Drehschalter und einem Anzeigebildschirm**

(30) Priorität: 29.05.1998 DE 19824100
(71) Anmelder: Mannesmann VDO Aktiengesellschaft, 60388 Frankfurt am Main (DE)
(72) Erfinder: Klein, Bernhard, 35614 Asslar (DE); Hengst, Axel, 35633 Lahnau (DE)
(74) Vertreter: Klein, Thomas, Dipl.-Ing.

(57) **Zusammenfassung**

Die Erfindung bezieht sich auf ein elektronisches Gerät mit einem Drehschalter und einem Anzeigebildschirm zur Anzeige von Informationen.
Es ist Aufgabe der Erfindung, ein derartiges Gerät dahingehend weiter zu entwickeln, daß es eine möglichst universelle und einfache Bedienung ermöglicht. Die Erfindung ist dadurch gekennzeichnet, daß der Drehschalter zur zweidimensionalen Bewegung wenigstens eines Anzeigeelementes des Anzeigebildschirms vorgesehen ist,
daß zur Auswahl der Bewegungsrichtung des Anzeigeelementes eine Drehbewegung des Drehschalters vorgesehen ist, und
daß zur Bewegung des Anzeigeelementes in der gewählten Bewegungsrichtung eine erste Axialbewegung des Drehschalters vorgesehen ist.

## Beschreibung

Die Erfindung bezieht sich auf ein elektronisches Gerät mit einem Drehschalter und einem Anzeigebildschirm zur Anzeige von Informationen.

Ein derartiges elektronisches Gerät ist aus der EP 366 132 B1 bekannt. Der Drehschalter dieses elektronischen Gerätes besitzt Raststellungen, denen Funktionsgruppen (Menüs) oder einzelne Funktionen zugeordnet sind, welche mittels Drehung des Drehschalters nacheinander auswählbar und mittels Drücken des Drehschalters aktivierbar sind. Mittels der Drehung des Drehschalters werden die einzelnen Menüs bzw. Funktionen je nach Drehrichtung im Uhrzeigersinn oder im Gegenuhrzeigersinn seriell ausgewählt. Insbesondere wenn die einzelnen Menüs oder Funktionen zweidimensional angeordnet sind, ist es bei diesem bekannten Drehschalter schwierig, zu einem bestimmten Menü bzw. zu einer bestimmten Funktion zu gelangen, die beispielsweise in schräger Richtung von der Ausgangsposition entfernt angeordnet ist.

Es ist Aufgabe der Erfindung, ein elektronisches Gerät der eingangs genannten Art dahingehend weiter zu entwickeln, daß es eine möglichst universelle und einfache Bedienung ermöglicht.

Diese Aufgabe ist erfindungsgemäß dadurch gelöst, daß der Drehschalter zur zweidimensionalen Bewegung wenigstens eines Anzeigeelementes des Anzeigebildschirms vorgesehen ist,
daß zur Auswahl der Bewegungsrichtung des Anzeigeelementes eine Drehbewegung des Drehschalters vorgesehen ist, und
daß zur Bewegung des Anzeigeelementes in der gewählten Bewegungsrichtung eine erste Axialbewegung des Drehschalters vorgesehen ist.

Als Anzeigeelement wird ein beliebiges, auf dem Anzeigebildschirm dargestelltes Element bezeichnet. Der Begriff Anzeigeelement umfaßt beispielsweise einen Cursor, bildliche Grafiken und Symbole sowie Textelemente.

Mittels Drehen des Drehschalters kann die Bewegungsrichtung des Anzeigelementes kontinuierlich oder in festen Winkelschritten ausgewählt werden. Nach der Auswahl der Bewegungsrichtung wird dann das jeweilige Anzeigeelement durch eine Betätigung des Drehschalters in axialer Richtung in der gewählten Bewegungsrichtung verschoben.

Dieses elektronische Gerät hat den Vorteil, daß das jeweilige Anzeigeelement zweidimensional in einer beliebig auswählbaren Richtung auf dem Anzeigebildschirm bewegt werden kann. Insbesondere kann das Anzeigeelement auch in schräger Richtung von der Ausgangsposition wegbewegt werden.

Neben der Verschiebung einzelner Anzeigelemente ist es auch möglich, die gesamte Anzeige des Anzeigebildschirm in der ausgewählten Bewegungsrichtung zu verschieben. Dies ist beispielsweise bei einer Kartendarstellung eines Navigationssystems vorteilhaft, um dem Benutzer eine einfache und schnelle Möglichkeit zu geben, benachbarte bzw. angrenzende Kartengebiete einzusehen.

Die vorteilhafte Ausgestaltung dieser Erfindung gemäß Anspruch 2 hat den Vorteil, daß der Benutzer die ausgewählte Bewegungsrichtung auf dem Bildschirm erkennen kann. Die Anzeige der Bewegungsrichtung auf dem Bildschirm kann mittels einer den Bildschirm ansteuernden Software individuell der jeweiligen Applikation und den Bedürfnissen des Benutzers angepaßt werden.

Die Ausgestaltung des elektronischen Gerätes gemäß Anspruch 3 hat den Vorteil, daß das Richtungs-Menü an die jeweils angezeigte Information angepaßt werden kann und somit dem Benutzer nur die für die jeweils angezeigte Information sinnvollen Richtungen zur Auswahl angibt. Das Richtungs-Menü kann beispielsweise nur in einem Teilbereich des Anzeigebildschirmes, vorzugsweise in einer Ecke des Anzeigebildschirmes, angezeigt werden. Ferner ist es möglich, daß das Richtungs-Menü den Anzeigebildschirm randförmig umschließt. Die auswählbaren Richtungsfelder des Richtungs-Menüs können zur ständigen Anzeige vorgesehen sein. Ferner ist es möglich, nur das jeweils ausgewählte Richtungsfeld des Richtungs-Menüs anzuzeigen. Dadurch ist die Fläche des Anzeigebildschirmes, die für die eigentlich anzuzeigende Information zur Verfügung steht, größer als bei der kontinuierlichen Anzeige des gesamten Richtungs-Menüs.

Gemäß der vorteilhaften Ausgestaltung des Anspruches 4 ist ein drehbarer Richtungspfeil zur grafischen Anzeige der Bewegungsrichtung vorgesehen. Die Drehung des Richtungspfeiles erfolgt entsprechend der Drehung des Drehschalters. Dabei kann die Drehung des Richtungspfeils sowohl in festen Schritten als auch kontinuierlich erfolgen. Ein derartiger drehbarer Richtungspfeil ist sehr einfach grafisch zu realisieren, Zudem benötigt er nur einen sehr geringen Platz auf dem Anzeigebildschirm. Der drehbare Richtungspfeil kann entsprechend der jeweiligen Applikation an verschiedenen Stellen des Anzeigebildschirmes angeordnet werden. Durch eine axiale Bewegung des Drehschalters wird das jeweilige Anzeigeelement in der von dem drehbaren Richtungspfeil angezeigten Richtung bewegt.

Eine weitere Möglichkeit besteht darin, einen die jeweilige Bewegungsrichtung anzeigenden Richtungspfeil auf dem Drehschalter selbst vorzusehen. Dies ist eine besonders einfache Möglichkeit, die keine grafische Anzeige auf dem Anzeigebildschirm erforderlich macht. Jedoch ist es erforderlich, daß der Benutzer die jeweilige Position des Richtungspfeiles auf dem Drehschalter einsieht, um sich über die ausgewählte Bewegungsrichtung des Anzeigeelementes zu informieren. Der Benutzer muß bei dieser Ausführungsform daher seinen Blick von dem Anzeigebildschirm abwenden.

Bei der vorteilhaften Ausgestaltung des elektronischen Gerätes gemäß Anspruch 5 kann das Anzeigeelement beispielsweise in Form eines blinkenden Cursors ausgebildet werden. Das in Form eines blinkenden Cursors ausgebildete Anzeigeelement kennzeichnet dann das jeweils ausgewählte Auswahlfeld. Jedem Auswahlfeld ist eine Funktionsgruppe und/oder eine Funktion zugeordnet. Unter Funktionsgruppe wird ein Menü verstanden, welches wenigstens zwei Funktionen und/oder weitere Unterfunktionsgruppen zur Auswahl bereitstellt. Zunächst wird mittels der Drehung des Drehschalters die gewünschte Bewegungsrichtung des Cursors eingestellt, und nachfolgend wird der Cursor mittels der ersten Axialbewegung des Drehschalters in der ausgewählten Bewegungsrichtung auf das gewünschte Auswahlfeld positioniert. Die Aktivierung einer derart ausgewählten Funktionsgruppe und/oder einer derart ausgewählten Funktion erfolgt vorteilhaft mittels einer zweiten Axialbewegung des Drehschalters, die von der ersten Axialbewegung verschieden ist.

Vorzugsweise wird die erste Axialbewegung gemäß Anspruch 7 durch ein Drücken des Drehschalters und die zweite Axialbewegung mittels eines Ziehens des Drehschalters realisiert. Diese entgegengesetzten ersten und zweiten Axialbewegungen ermöglichen dem Benutzer intuitiv ein funktionssicheres und störunanfälliges Durchführen der gewünschten Funktion.

Es ist jedoch auch möglich, als erste Axialbewegung ein kurzes Drücken des Drehschalters, das nicht länger als eine vorgebbare Schwellzeit dauert, vorzusehen. Bei einer derartigen Ausgestaltung wird dann mit jedem kurzen Druck das Anzeigeelement bzw. der Cursor in der ausgewählten Bewegungsrichtung verschoben und jeweils das nachfolgende Auswahlfeld ausgewählt sowie optisch mittels des Anzeigeelementes gekennzeichnet. Als zweite Axialbewegung zur Aktivierung einer dem jeweiligen Auswahlfeld zugeordneten Funktionsgruppe und/oder Funktion kann dann beispielsweise ein langes Drücken des Drehschalters vorgesehen sein, welches länger als eine vorgebbare Schwellzeit dauert. Alternativ ist es möglich, als erste Axialbewegung einen Dauerdruck des Drehschalters vorzusehen, wobei eine entsprechende Bewegung des Anzeigelementes in der ausgewählten Bewegungsrichtung so lange erfolgt, wie der Drehschalter gedrückt ist. Die Geschwindigkeit der Bewegung des Anzeigeelementes kann dabei innerhalb fester Zeitraster erhöht werden. Die Aktivierung des ausgewählten Auswahlfeldes kann bei dieser Ausführungsform dann beispielsweise mittels eines kurzen Drückens des Drehschalters oder mittels Ziehen des Drehschalters erfolgen.

Alternativ ist es auch möglich, gemäß Anspruch 8 ein Aktivierungsfeld in dem Richtungs-Menü vorzusehen. Ein derartiges Aktivierungsfeld kann dann mittels Drehen des Drehschalters ausgewählt und mittels einer Axialbewegung des Drehschalters aktiviert werden. Bei dieser Ausführungsform ist keine zweite, von der ersten Axialbewegung verschiedene Axialbewegung erforderlich. Sowohl das Bewegen des Anzeigeelementes in der ausgewählten Bewegungsrichtung als auch das Aktivieren eines ausgewählten Auswahlfeldes kann mittels ein und derselben Axialbewegung, d.h. beispielsweise mittels Drücken des Drehschalters, realisiert werden.

Einige schematisch dargestellte Ausführungsbeispiele der Erfindung werden nachfolgend anhand der Zeichnung in den Fig. 1 bis 5 näher erläutert. Es zeigen:
Fig. 1 den prinzipiellen Aufbau eines Drehschalters in Seitenansicht.
Fig. 2 den prinzipiellen Aufbau des Drehschalters gemäß Fig. 1 in Draufsicht.
Fig. 3 einen Anzeigebildschirm eines elektronischen Gerätes, wobei die Bewegungsrichtung eines Cursors mittels einer Drehbewegung des Drehschalters auswählbar ist und wobei die ausgewählte Bewegungsrichtung als Richtungspfeil grafisch angezeigt wird,
Fig. 4a - 4d eine Abfolge verschiedener Anzeigen eines Anzeigebildschirms, wobei der Anzeigebereich des Anzeigebildschirms zur Darstellung einer Karte vorgesehen ist und die Karte in einer auswählbaren Bewegungsrichtung verschiebbar ist, und wobei zur Auswahl der Bewegungsrichtung ein den Anzeigebildschirm randförmig umschließendes Richtungs-Menü vorgesehen ist,
Fig. 5 einen Anzeigebildschirm gemäß Fig. 4a, wobei das Richtungs-Menü in der rechten unteren Ecke des Bildschirms angeordnet ist

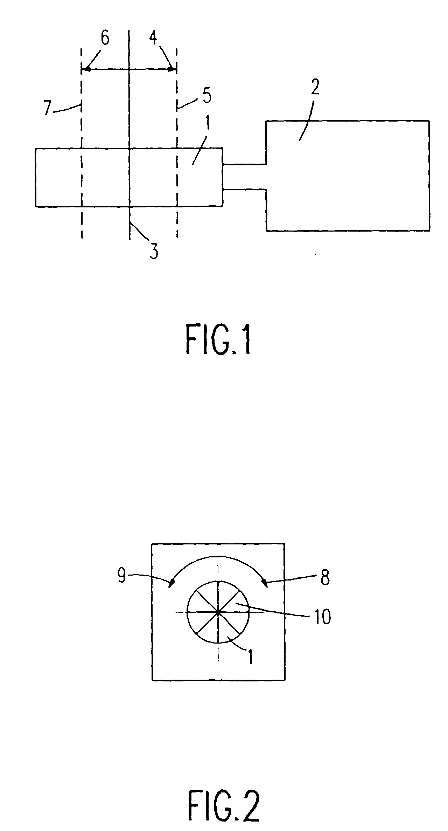

Fig. 1 zeigt einen Drehschalter 1 eines schematisch dargestellten elektronischen Gerätes 2 in Seitenansicht. Der Drehschalter 1 befindet sich in einer Mittelstellung 3. Ausgehend von dieser Mittelstellung 3 kann der Drehschalter 1 in Richtung des Pfeiles 4 in eine Druckstellung 5 gedrückt werden. In entgegengesetzter Richtung kann der Drehknopf 1, ausgehend von der Mittelstellung 3, in Richtung eines Pfeiles 6 in eine Zugstellung 7 gezogen werden. Der Drehknopf 1 ist in Richtung auf die Mittelstellung 3 mittels nicht dargestellter Federn vorgespannt, so daß er, falls er von der Bedienperson losgelassen wird, sowohl von der Druckstellung 5 als auch von der Zugstellung 7 selbsttätig in die Mittelstellung 3 zurückspringt.

Fig. 2 zeigt den Drehschalter gemäß Fig. 1 in Draufsicht. Der Drehschalter 1 kann von der Bedienperson in Richtung des Pfeiles 8 im Uhrzeigersinn gedreht werden und in Richtung des Pfeiles 9 entgegen dem Uhrzeigersinn gedreht werden. Der Drehmechanismus des Drehschalters 1 ist mittels eines Inkrementgebers ohne Anschlag realisiert. Der Inkrementgeber unterteilt eine volle Umdrehung des Drehschalters 1 in eine vorgebbare Anzahl von Schritten 10.

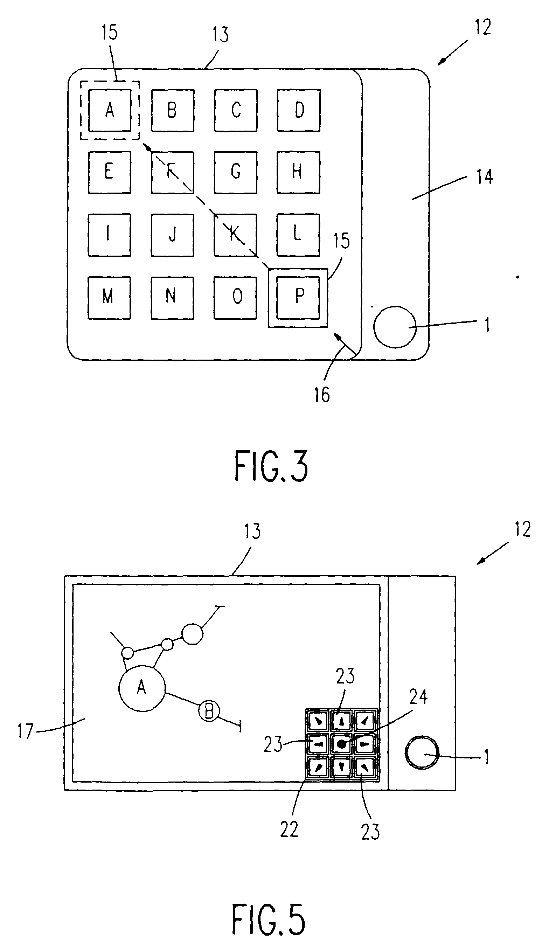

Fig. 3 zeigt einen Anzeigebildschirm 12 mit einem Anzeigebereich 13 und einem Bedienbereich 14. In dem Bedienbereich 14 ist der Drehschalter 1 angeordnet. Der Anzeigebereich 13 des Anzeigebildschirms 12 weist sechzehn Auswahlfelder A bis P auf. Diesen Auswahlfeldern A bis P sind einzelne Funktionsgruppen (Menüs) und/oder Funktionen zugeordnet. Als Anzeigeelement ist ein Cursor 15 vorgesehen, mittels dessen eines der Auswahlfelder A bis P auswählbar ist. Der Cursor 15 umschließt das ausgewählte Auswahlfeld P rahmenförmig, wodurch eine optische Kennzeichnung des ausgewählten Auswahlfeldes P erfolgt. Die optische Kennzeichnung des ausgewählten Auswahlfeldes P kann beispielsweise mittels Blinken des Cursors 15 verstärkt werden.

Die Bewegungsrichtung des Cursors 15 kann mittels Drehen des Drehschalters 1 ausgewählt werden. Zur optischen Anzeige der ausgewählten Bewegungsrichtung ist ein drehbarer Richtungspfeil 16 vorgesehen, der in der unteren rechten Ecke des Anzeigebereichs 13 des Anzeigebildschirms 12 angeordnet ist.

Die Auswahl der Bewegungsrichtung des Cursors 15 sowie die anschließende Bewegung des Cursors 15 in der ausgewählten Bewegungsrichtung soll nachfolgend anhand eines Beispiels erläutert werden: In der Fig. 3 umrahmt der Cursor 15 das Auswahlfeld P und kennzeichnet damit optisch, daß dieses Auswahlfeld P ausgewählt ist. Um den Cursor 15 zu verschieben bzw. zu bewegen, muß zunächst die gewünschte Bewegungsrichtung des Cursors 15 ausgewählt werden. Dies erfolgt mittels Drehen des Drehschalters 1. Die mittels der Drehbewegung des Drehschalters 1 ausgewählte Bewegungsrichtung wird grafisch mittels des Richtungspfeiles 16 dargestellt. In Fig. 3 wurde eine Bewegungsrichtung für den Cursor 15 ausgewählt, die unter einem Winkel von ca. 45° nach oben-links verläuft. Um den Cursor 15 in der ausgewählten Bewegungsrichtung zu bewegen, ist eine erste Axialbewegung des Drehschalters 1 vorgesehen. Die erste Axialbewegung kann beispielsweise ein kurzes Drücken des Drehschalters 1 sein, welches nicht länger als eine vorgebbare Schwellzeit dauert. Ausgehend von der in der Fig. 3 dargestellten Position des Cursors 15 wird dieser mittels eines einmaligen kurzen Druckes auf den Drehschalter 1 auf das Auswahlfeld K positioniert, mit einem weiteren kurzen Druck auf den Drehschalter 1 auf das Auswahlfeld F und mittels eines weiteren Druckes auf das Auswahlfeld A positioniert. Ein dreimaliges kurzes Drücken bewegt den Cursor 15 somit von dem Auswahlfeld P auf das Auswahlfeld A in die gestrichelt dargestellte Position.

Für die Aktivierung des jeweils ausgewählten Auswahlfeldes, in diesem Beispiel zur Aktivierung des Auswahlfeldes A, ist eine zweite Axialbewegung des Drehschalters 1 vorgesehen, die verschieden von der ersten Axialbewegung ist. Als zweite Axialbewegung kann beispielsweise ein langes Drücken des Drehschalters 1 vorgesehen sein, das länger als die vorgebbare Schwellzeit dauert. Durch ein derartiges langes Drücken kann somit das Auswahlfeld A aktiviert werden, wodurch die dem Auswahlfeld A zugeordnete Funktionsgruppe und/oder die dem Auswahlfeld A zugeordnete Funktion aufgerufen bzw. aktiviert werden.

Als alternative Möglichkeit kann als erste Axialbewegung ein Drücken des Drehschalters 1 und als zweite Axialbewegung ein Ziehen des Drehschalters 1 vorgesehen sein. Ferner ist es möglich, als erste Axialbewegung einen kontinuierlichen Dauerdruck des Drehschalters 1 vorzusehen, wobei die Geschwindigkeit der Bewegung des Cursors 15 in diesem Fall durch ein "Time-Out" geregelt wird, d.h., wenn der Benutzer eine bestimmte Zeit (z.B. 750 ms) den Drehschalter gedrückt hält, verdoppelt sich die Geschwindigkeit der Bewegung des Cursors 15. Weitere Steigerungen der Bewegungsgeschwindigkeit des Cursors 15 können zu späteren Zeitpunkt. d.h. bei länger andauerndem Drücken des Drehschalters 1 erfolgen.

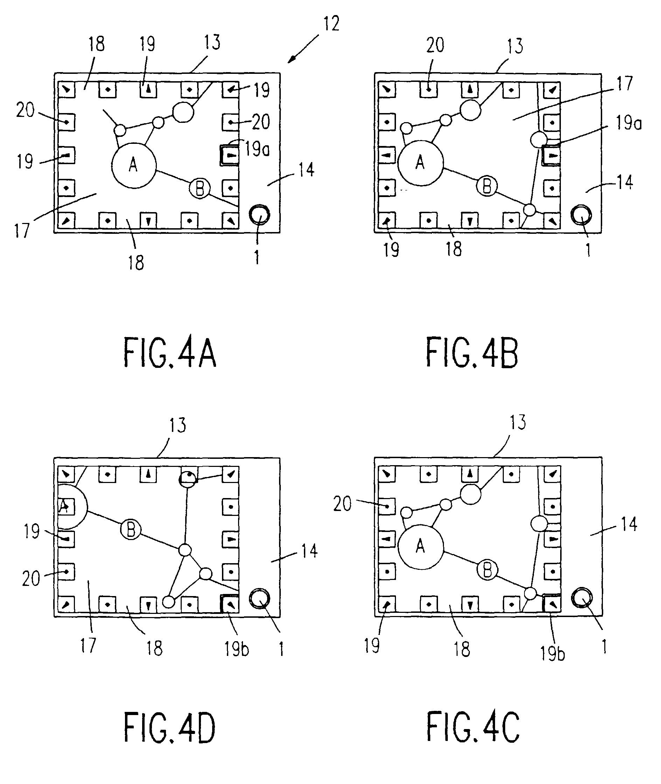

Die Fig. 4a bis 4d zeigen eine Ausführungsform der Erfindung, bei der nicht nur einzelne Anzeigeelemente, sondern der gesamte Anzeigebereich 13 in einer ausgewählten Bewegungsrichtung verschiebbar ist. In dem gewählten Ausführungsbeispiel dient der Anzeigebereich 13 des Anzeigebildschirms 12 zur Anzeige eines Kartenausschnittes 17 einer Karte eines Navigationssystems. Zur Auswahl der Bewegungsrichtung des Kartenausschnitts 17 ist ein Richtungs-Menü 18 vorgesehen, welches den Anzeigebereich 13 des Anzeigebildschirms 12 randförmig umschließt. Das randförmige Richtungs-Menü 18 weist Richtungsfelder 19 auf, die jeweils abwechselnd mit Aktivierungsfeldern 20 über den Umfang des Anzeigebereichs 13 verteilt sind. Die Richtungsfelder 19 kennzeichnen die jeweils ausgewählte Bewegungsrichtung für den Kartenausschnitt 17. Mittels der Aktivierungsfelder 20 kann die Anwendung "Kartenausschnitt anzeigen" verlassen werden und ein Auswahl-Menü für weitere Funktionen aufgerufen werden.

Mittels Drehen des Drehschalters 1 können die verschiedenen Richtungsfelder 19 des Richtungs-Menüs 18 sowie die Aktivierungsfelder 20 jeweils nacheinander ausgewählt werden. Diese Funktionsweise wird nun nachfolgend anhand der Fig. 4a bis 4d näher erläutert.

In der Fig. 4a ist das optisch hervorgehobene Richtungsfeld 19a "Pfeil rechts" durch Drehen des Drehschalters 1 ausgewählt worden. Mittels Drücken des Drehschalters 1 kann der auf dem Anzeigebereich 13 dargestellte Kartenausschnitt 17 nach rechts verschoben werden. Solange der Drehschalter 1 bei ausgewähltem Richtungsfeld 19a gedrückt wird, bewegt sich der Kartenausschnitt 17 nach rechts. Dies ist in der Fig. 4b dargestellt, in der der Kartenausschnitt 17 gegenüber dem in der Fig. 4a dargestellten Kartenausschnitt 17 nach rechts verschoben worden ist. In der Fig. 4c ist durch Drehen des Drehschalters 1 das Richtungsfeld 19b "Pfeil rechts - unten" ausgewählt worden. Mittels Drücken des Drehschalters 1 bei ausgewähltem Richtungsfeld 19b wird der Kartenausschnitt 17 nach "rechts - unten" bewegt. solange der Drehschalter 1 gedrückt wird. Dies ist in der Fig. 4d dargestellt. Der in der Fig. 4d dargestellte Kartenausschnitt 17 ist gegenüber dem in den Fig. 4b und 4c dargestellten Kartenausschnitt 17 mittels Drücken des Drehschalters 1 bei ausgewähltem Richtungsfeld 19b nach "rechts - unten" verschoben worden.

Durch ein Time-Out kann die Bewegungsgeschwindigkeit des Kartenausschnittes 17 erhöht werden, d.h., wenn der Benutzer für eine vorgebbare Mindestzeit, beispielsweise 750 ms, den Drehschalter 1 gedrückt hält, verdoppelt sich die Bewegungsgeschwindigkeit des Kartenausschnittes 17. Weitere Steigerungen der Bewegungsgeschwindigkeit des Kartenausschnittes 17 können bei länger anhaltendem Drücken des Drehschalters 1 erfolgen. Eine derartige Time-Out-Funktion kann softwaremäßig gesteuert und eingestellt werden. Um die Funktion "Kartenausschnitt anzeigen" zu verlassen, muß mittels Drehen des Drehschalters 1 eines der Aktivierungsfelder 20 ausgewählt werden. Durch nachfolgendes Drücken des Drehschalters 1 bei ausgewähltem Aktivierungsfeld 20 wird dann die Funktion "Kartenausschnitt anzeigen" verlassen und beispielsweise ein Hauptmenü oder ähnliches zur Auswahl anderweitiger Funktionen aufgerufen.

Bei dem Richtungs-Menü 18 kann softwaremäßig dafür gesorgt werden, daß immer nur das aktuell ausgewählte Richtungsfeld 19 angezeigt wird, während die übrigen Richtungsfelder 19 verdeckt bleiben. Dadurch wird die Fläche, die für den eigentlich anzuzeigenden Kartenausschnitt 17 zur Verfügung steht, vergrößert. Durch die alternierende Anordnung von Richtungsfeldern 19 und Aktivierungsfeldern 20 hat der Benutzer die Möglichkeit, die Funktion "Kartenausschnitt anzeigen" nach jedem Drehschritt des Drehschalters 1 zu verlassen und beispielsweise ein Hauptmenü aufzurufen.

Fig. 5 zeigt den Anzeigebildschirm 12 gemäß Fig. 4. auf dem ebenfalls ein Kartenausschnitt 17 einer Karte eines Navigationssystems dargestellt ist. Zur Auswahl der Bewegungsrichtung des Kartenausschnittes 17 ist in der rechten unteren Ecke des Anzeigebereichs 13 ein Richtungs-Menü 22 angeordnet. Das Richtungs-Menü 22 weist diskrete, die jeweilige Bewegungsrichtung kennzeichnende Richtungsfelder 23 sowie ein zentrales Aktivierungsfeld 24 auf. Mittels Drehen des Drehschalters 13 können die verschiedenen Richtungsfelder 23 sowie das Aktivierungsfeld 24 ausgewählt werden. Um den Kartenausschnitt 17 in einer gewünschten Bewegungsrichtung zu verschieben, kann mittels Drehen des Drehschalters 1 eines der Richtungsfelder 23 ausgewählt werden. Durch nachfolgendes Drücken des Drehschalters 1 wird der Kartenausschnitt 17 dann in der ausgewählten Bewegungsrichtung verschoben. Dies erfolgt entsprechend den zu den Fig. 4a bis 4d gemachten Ausführungen. Das Richtungs-Menü 22 kann softwaremäßig beispielsweise derart realisiert werden, daß das Aktivierungsfeld 24 bei Drehung des Drehschalters 1 jeweils nach jedem einzelnen Richtungsfeld 23 ausgewählt wird. Alternativ ist es möglich, daß das Aktivierungsfeld 24 nur nach jeweils einer vollen Umdrehung des Drehschalters 1 ausgewählt wird. Wird der Drehschalter 1 bei ausgewähltem Aktivierungsfeld 20 gedrückt, so wird entsprechend den zu den Fig. 4a bis 4d gemachten Ausführungen die Funktion "Kartenausschnitt anzeigen" verlassen und ein Hauptmenü oder ähnliches aufgerufen.

Mit der Erfindung wird eine Möglichkeit aufgezeigt, einen Cursor, andere Anzeigeelemente eines Bildschirms oder den gesamten Anzeigebereich des Bildschirms mittels eines Drehschalters in beliebig vorgebbaren Richtungen auf dem Bildschirm zu bewegen. Als Anwendungsbereiche für die Erfindung sind insbesondere elektronische Geräte in Kraftfahrzeugen, wie beispielsweise Navigationssysteme, geeignet, da ein Drehschalter auch während der Fahrt relativ einfach und fünktionssicher zu bedienen ist. Zudem läßt sich ein derartiger Drehschalter kostengünstig und platzsparend realisieren.

## Patentansprüche

1. Elektronisches Gerät mit einem Drehschalter und einem Anzeigebildschirm zur Anzeige von Informationen, dadurch gekennzeichnet, daß der Drehschalter zur zweidimensionalen Bewegung wenigstens eines Anzeigeelementes des Anzeigebildschirms vorgesehen ist,
daß zur Auswahl der Bewegungsrichtung des Anzeigeelementes eine Drehbewegung des Drehschalters vorgesehen ist, und
daß zur Bewegung des Anzeigeelementes in der gewählten Bewegungsrichtung eine erste Axialbewegung des Drehschalters vorgesehen ist.

2. Elektronisches Gerät nach Anspruch 1, dadurch gekennzeichnet, daß zur Auswahl der Bewegungsrichtung eine grafische Anzeige der Bewegungsrichtung auf dem Anzeigebildschirm vorgesehen ist.

3. Elektronisches Gerät nach Anspruch 2, dadurch gekennzeichnet, daß zur Auswahl der Bewegungsrichtung als grafische Anzeige ein Richtungs-Menü mit die jeweilige Bewegungsrichtung kennzeichnenden Richtungsfeldern vorgesehen ist.

4. Elektronisches Gerät nach Anspruch 1, dadurch gekennzeichnet, daß ein drehbarer Richtungspfeil zur grafischen Anzeige der Bewegungsrichtung vorgesehen ist.

5. Elektronisches Gerät nach Anspruch 1, dadurch gekennzeichnet, daß mittels der Bewegung des Anzeigeelementes einzelnen Funktionsgruppen und/oder Funktionen zugeordnete Auswahlfelder auswählbar sind, wobei das Anzeigeelement zur optischen Kennzeichnung des jeweils ausgewählten Auswahlfeldes vorgesehen ist.

6. Elektronisches Gerät nach Anspruch 5, dadurch gekennzeichnet, daß zur Aktivierung einer Funktionsgruppe und/oder einer Funktion eine zweite Axialbewegung vorgesehen ist.

7. Elektronisches Gerät nach Anspruch 6, dadurch gekennzeichnet, daß die erste Axialbewegung eine Druckbewegung und die zweite Axialbewegung eine Zugbewegung des Drehschalters ist.

8. Elektronisches Gerät nach Anspruch 7, dadurch gekennzeichnet, daß das Richtungs-Menü wenigstens ein Aktivierungsfeld aufweist, das mittels der Drehbewegung des Drehschalters auswählbar und mittels einer Axialbewegung des Drehschalters aktivierbar ist, wobei das Aktivierungsfeld zur Aktivierung einer ausgewählten Funktionsgruppe und/oder Funktion vorgesehen ist.

9. Elektronisches Gerät nach Anspruch 1, dadurch gekennzeichnet, daß der Drehschalter zur zweidimensionalen Bewegung des gesamten Anzeigebereichs des Anzeigebildschirms vorgesehen ist, insbesondere zur Bewegung eines auf dem Anzeigebildschirm dargestellten Kartenausschnitts.

10. Navigationssystem mit einem elektronischen Gerät nach Anspruch 1.
